# EUROPÄISCHE PATENTSCHRIFT

(11) **EP 1 976 292 B1**
(45) Veröffentlichungstag und Bekanntmachung des Hinweises auf die Patenterteilung: **24.12.2014**
(21) Anmeldenummer: 08003747.6
(22) Anmeldetag: 29.02.2008
(51) Int. Cl.: H04N 7/15

(54) **Verfahren und Videokommunikationssystem zur Einspeisung von Avatar-Informationen in einen Videodatenstrom**
Method and video communication system for feeding avatar information into a video data stream
Procédé et système de communication vidéo destinés à l'alimentation d'informations d'avatar dans un flux de données vidéo

(30) Priorität: 02.03.2007 DE 102007010664
(43) Veröffentlichungstag der Anmeldung: 01.10.2008
(73) Patentinhaber: Deutsche Telekom AG, 53113 Bonn (DE)
(72) Erfinder: Kaspar, Bernhard, 64646 Heppenheim (DE); Englert, Roman, 53913 Buschhoven gem. Swisttal (DE); Kremer, Thomas, 64293 Darmstadt (DE); Milczewsky, Klaus, 64342 Seeheim-Jugenheim (DE)
(74) Vertreter: Kampfenkel, Klaus

(56) Entgegenhaltungen:
- WO-A-01/60070
- WO-A-99/57900
- WO-A-2005/025219
- GB-A- 2 351 635

## Beschreibung

Die Erfindung betrifft ein Verfahren sowie ein Avatar-basiertes Videokommunikationssystem zum Übertragen von Avatar-basierten Informationen in einem Videodatenstrom zwischen wenigstens zwei Endeinrichtungen, und zwar in Echtzeit. Weiterhin betrifft die Erfindung ein Telekommunikationsendgerät zum Einsatz in einem solchen Avatar-basierten Videokommunikationssystem.

Gestik-basierte Echtzeit-Steuerung von Avataren auf der Basis von leistungsfähigen Computern ist hinlänglich bekannt. Ein Avatar ist eine virtuelle Stellvertreterfigur, die eine natürliche Person darstellt. Durch die Avatar-Darstellung können beteiligte natürliche Personen in andere Rollen schlüpfen. Kopf-, Hand- und Fingerbewegungen werden hierbei in Echtzeit in Bewegung eines 3D-Avatar-Modells umgesetzt. Zu diesem Zweck werden Videosequenzen der natürlichen Person über eine Kamera aufgezeichnet. Aus den Videosequenzen werden dann durch eine automatische Analyse Bewegungsdaten generiert. Die Bewegungsdaten werden kodiert zu einem Empfänger übertragen und zur Ansteuerung des beweglichen Avatars genutzt. Die Gestik-basierte Echtzeit-Steuerung von Avataren ist beispielsweise aus der DE 10 2004 059 051 A1 bekannt.

Die Avatar-Technologie wird heutzutage auch in audiovisuellen Telekommunikationssystemen eingesetzt. Durch den Einsatz einer Avatar-Technologie kann gegenüber einer herkömmlichen Videotelefonie-Kommunikation Übertragungsbandbreite eingespart werden, da Avatar-Informationen nur einen Bruchteil der Datenmenge verglichen mit Videoinformationen benötigt. Darüber hinaus wird durch den Einsatz einer Avatar-Technologie Kommunikationsteilnehmern die Möglichkeit geboten, in eine gewünschte Rolle zu schlüpfen, die durch den Avatar repräsentiert wird. Der Kommunikationspartner sieht dann während eines Gesprächs nicht sein Gegenüber direkt, sondern dessen Avatar. Ein wichtiges Anwendungsgebiete für den Einsatz einer Avatar-Technologie ist die audiovisuelle Kommunikation, wie zum Beispiel Video-Telefonie und Video-Konferenzen.

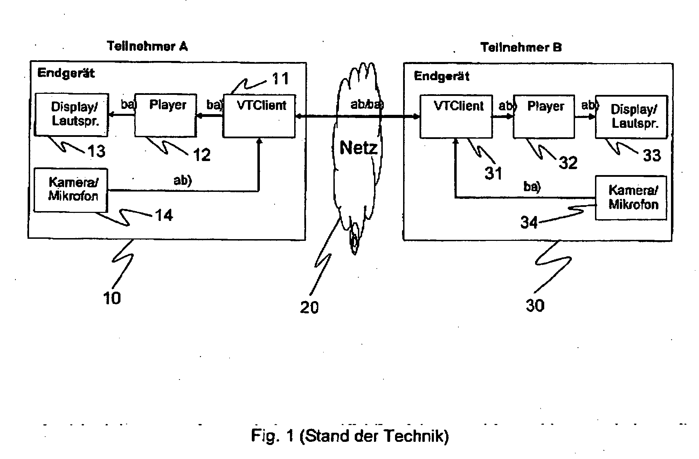

In Fig. 1 ist schematisch die Architektur für eine herkömmliche Videotelefonie-Kommunikation dargestellt. Das ausschnittsweise dargestellte Videokommunikationssystem weist ein Endgerät 10 bei einem Teilnehmer A auf, welches über ein Kommunikationsnetz 20, welches beispielsweise ein IP-basiertes Kommunikationsnetz oder auch das ISDN sein kann, mit einem Endgerät 30 bei einem Teilnehmer B verbunden werden kann. Das Endgerät 10 weist in an sich bekannter Weise eine Kamera und ein Mikrofon auf, die der einfachen Darstellung wegen in einem gemeinsamen Funktionsblock 14 dargestellt sind. Die Ausgangssignale der Kamera und des Mikrofon werden einem standardisierten Video-Telefonie-Client zugeführt, der in dem Funktionsblock 11 läuft. Der Funktionsblock 11 weist einen ersten Ausgang, der mit dem Kommunikationsnetz 20 verbunden werden kann, und einen zweiten Ausgang, der mit einem standardisierten Video-Player 12 verbunden ist, auf. Die Ausgangssignale des Video-Players 12 steuern einen Bildschirm und eine Lautsprechereinrichtung an, die beispielsweise in einem gemeinsamen Gerät angeordnet sind.

Das Endgerät 30 des Teilnehmers B ist in gleicher Weise aufgebaut und weist eine Kamera und ein Mikrofon auf, die beispielsweise in einem Funktionsblock 34 angeordnet sind. Die Ausgangssignale der Kamera und des Mikrofons werden wiederum einem standardisierten Video-Telefonie-Client zugeführt, der in einem Funktionsblock 31 läuft. Die von der Kamera und/oder dem Mikrofon kommenden Ausgangssignale überträgt der im Funktionsblock 34 laufende Video-Telefonie-Client zum Funktionsblock 11 des Teilnehmers A, während die vom Video-Telefonie-Client, der im Funktionsblock 11 läuft, kommenden Videosignale über den Funktionsblock 34 einem standardisierten Video-Player 32 zugeführt werden, dessen Ausgangssignale wiederum eine Bildschirm- und Lautsprechereinrichtung 33 ansteuern. In bekannter Weise sind die Video-Telefonie-Clients 11 und 31 in der Lage, eine Video-Telefonie-Anwendungen zwischen den Endgeräten 10 und 30 aufzubauen und zu steuern.

Die übliche Funktionsweise des in Fig. 1 dargestellten bekannten Videokommunikationssystems wird nunmehr kurz erläutert. Angenommen sei, dass über die beiden Video-Telefonie-Clients 11 und 31 eine Kommunikationsverbindung über das Kommunikationsnetz 20 aufgebaut worden ist. Das Mikrofon des Endgeräts 10 nimmt die Stimme des Teilnehmers A auf, während die Kamera Videosequenzen des Teilnehmers A aufzeichnet. Mikrofon und Kamera geben die Sprach- und Bildinformationen an den Video-Telefonie-Client im Funktionsblock 11 weiter. Der Video-Telefonie-Client erzeugt in Echtzeit aus den Sprach- und Bildinformationen unter Anwendung eines standardisierten Kodieralgorithmus einen Videodatenstrom, der über die bestehende Verbindung des Kommunikationsnetz 20 zum Video-Telefonie-Client des Endgerätes 30 übertragen wird. Angemerkt sei, dass der im Funktionsblock 11 laufende Video-Telefonie-Client üblicherweise eine Datenkompression der Sprach- und Bildinformationen vornimmt. Der Video-Telefonie-Client des Endgerätes 30 empfängt den Videodatenstrom, dekodiert ihn in Echtzeit und übergibt die audiovisuellen Signale an den Video-Player 32 weiter. Der Video-Player 32 trennt in an sich bekannter Weise die Bild- und Toninformation und erzeugt entsprechende Steuersignale für die Display- und Lautsprechereinrichtung 33. Das Endgerät 30 kann in gleicher Weise Bild- und Toninformationen vom Teilnehmer B aufnehmen und zum Endgerät 10 übertragen. In Fig. 1 ist mit "ab" der Signalweg vom Teilnehmer A zum Teilnehmer B dargestellt, während mit "ba" der Weg vom Teilnehmer B zum Teilnehmer A bezeichnet ist.

Die Druckschrift WO 99/57900 beschreibt ein System, das auf einer "User-Seite" sensorische Informationen aufnimmt und sie auf einer anderen Seite in manipulierter Form wiedergibt. Hierzu werden so genannte essentielle Informationen übertragen.

Der vorliegenden Erfindung liegt die Aufgabe zugrunde, ein Verfahren und ein Avatar-basiertes Videokommunikationssystem sowie eine Telekommunikations-Endeinrichtung bereitzustellen, mit der eine Avatar-basierte Videokommunikation auch dann möglich ist, wenn eine Endeinrichtung nicht zum Empfang und Verarbeiten von Avatar-Informationen ausgebildet ist.

Ein Kerngedanke der Erfindung ist darin zu sehen, ein Avatar-basiertes Videokommunikationssystem bereitzustellen, welches erlaubt, Avatar-Informationen in einen standardmäßigen Videodatenstrom zu transformieren und diesen Videodatenstrom in eine vorhandene herkömmliche Videotelefonie-Verbindung einzuspeisen. Wesentlich ist hierbei, dass die Avatar-basierte Videokommunikation zwischen den kommunizierenden Teilnehmern in Echtzeit erfolgen kann.

Das oben genannte technische Problem wird zum einen durch ein Verfahren zum Übertragen von Avatar-basierten Informationen in einem Videodatenstrom zwischen wenigstens zwei Endeinrichtungen, und zwar in Echtzeit, gelöst.

Hierzu wird eine Videosequenz einer natürlichen Person in einer ersten Endeinrichtung, beispielsweise mit von einer herkömmlichen Videokamera, aufgezeichnet. Aus der Videosequenz werden Steuerparameter zum Steuern eines virtuellen Körpermodells, nachfolgend auch Avatar genannt, generiert. Zu einem Zeitpunkt wird eine Kommunikationsverbindung zwischen der ersten Endeinrichtung und einer zweiten Endeinrichtung aufgebaut. Wenn die zweite Endeinrichtung nicht zum Verarbeiten von Steuerparametern, die zum Steuern eines virtuellen Körpermodells verwendet werden, ausgebildet ist, werden die Steuerparameter in herkömmliche standardmäßige Videodaten umgesetzt. Unter Anwendung eines standardisierten Kodieralgorithmus werden die Videodaten in einen Videodatenstrom umgesetzt, der über ein Kommunikationsnetz zur zweiten Endeinrichtung übertragen wird. Der Inhalt des Videodatenstroms wird über eine audiovisuelle Ausgabeeinrichtung wiedergegeben.

Dank dieses Verfahrens ist es möglich, eine Avatar-basierte Videokommunikation zwischen Endgeräten zu ermöglichen, von denen wenigstens eine nicht zum Empfangen und Verarbeiten von Avatar-Informationen ausgebildet ist.

Um einem rufenden Teilnehmer bei einer Avatar-basierten Videokommunikation auch die Vorteile einer reinen Avatar-Video-Telefonie anbieten zu können, bei der lediglich die Steuerdaten zur Ansteuerung eines virtuellen Körpermodells übertragen werden müssen, wird vor der eigentlichen Informationsübertragung festgestellt, ob die zweite Endeinrichtung, zu der die Informationen übertragen werden sollen, zum Verarbeiten von Avatar-Steuerparametern ausgebildet ist. Wenn dies der Fall ist, werden die Steuerparameter, die zum Steuern eines virtuellen Körpermodells benötigt werden, in der ersten Endeinrichtung unter Anwendung eines standardisierten Kodieralgorithmus kodiert und zur zweiten Endeinrichtung übertragen. Der Kodieralgorithmus kann auf einem MPEG-Standard basieren. In der zweiten Endeinrichtung werden die kodierten Steuerparameter dekodiert. Unter Verwendung der Steuerparameter wird ein in der zweiten Endeinrichtung gespeichertes virtuelles Körpermodell angesteuert und auf einem Anzeigegerät dargestellt.

Die Steuerparameter können Bewegungs- und/oder Texturparameter enthalten, die gemäß einem MPEG-Standard kodiert werden.

In einer vorteilhaften Ausführungsform wird zwischen der ersten und zweiten Endeinrichtung eine Video-Telefonverbindung aufgebaut, über die die Avatar-Informationen übertragen werden.

Das oben genannte technische Problem wird ebenfalls durch ein Avatar-basiertes Videokommunikationssystem gelöst. Das Avatar-basierte Videokommunikationssystem weist ein Kommunikationsnetz auf, welches drahtgebundenes oder drahtloses Kommunikationsnetz sein kann. Als drahtgebundenes Netz kann zum Beispiel das Internet oder das ISDN verwendet werden, während als drahtloses Netz ein öffentliches Mobilfunknetz oder ein WLAn in Frage kommen kann. Mehrere Endeinrichtungen sind vorgesehen, die über das Kommunikationsnetz verbunden werden können. Das Videokommunikationssystem enthält wenigstens eine erste Endeinrichtung mit einer Sendestufe, die folgende Merkmale aufweist: eine Einrichtung zum Aufzeichnen von Videosequenzen einer natürlichen Person, eine Einrichtung zum Erzeugen von Steuerparametern zum Steuern eines virtuellen Körpermodells unter Ansprechen auf die Videosequenz, eine Umsetzungseinrichtung zum Umsetzen der Steuerparameter in standardgemäße Videodaten, wie sie eine herkömmlichen Video-Kamera liefert, und zwar in Echtzeit, eine erste Einrichtung zum Kodieren der Videodaten in einen Videodatenstrom unter Anwendung eines standardisierten Videokommunikations-Protokolls, eine Sendeeinrichtung zum Übertragen des Videodatenstroms über das Kommunikationsnetz zu einer zweiten Endeinrichtung. Die zweite Endeinrichtung weist eine Empfangseinrichtung zum Empfangen des Videodatenstroms und eine Einrichtung zur Wiedergabe des Inhaltes des Videodatenstroms auf. Angemerkt sei, dass die zweite Endeinrichtung ein herkömmliches Videotelefonietaugliches Endgerät sein kann.

Damit die erste Endeinrichtung Avatar-Informationen über eine schmalbandige Verbindung zu einer Avatar-basierten Endeinrichtung übertragen kann, weist die erste Endeinrichtung eine Einrichtung zum Feststellen auf, ob die andere Endeinrichtung zum Verarbeiten von Steuerparametern, die zum Steuern eines virtuellen Körpermodells benötigt werden, ausgebildet ist. Zu diesem Zweck weist die Sendestufe der ersten Endeinrichtung ferner eine zweite Einrichtung zum Kodieren von Steuerparametern auf, die zum Steuern eines virtuellen Körpermodells verwendbar sind, und zwar unter Anwendung eines standardisierten Kodieralgorithmus, sowie eine Einrichtung zum Übertragen kodierter Steuerparameter.

Weiterhin kann die Sendestufe eine Einrichtung zur Aufnahme von Sprachsignalen der natürlichen Person und eine Einrichtung zum Übertragen der Sprachsignale über das Kommunikationsnetz aufweisen. Um Sprachsignale Empfangen und Wiedergeben zu können, weist die zweite Endeinrichtung eine Empfangseinrichtung zum Empfangen von Sprachsignalen und eine akustische Einrichtung zur Sprachausgabe auf.

Bei einer vorteilhaften Ausführungsform ist die erste und zweite Endeinrichtung zur standardmäßigen Video-Telefonie ausgebildet.

Das oben genannte technische Problem wird weiterhin durch ein Telekommunikations-Endgerät gelöst, welches für den Einsatz in einem Avatar-basierten Videokommunikationssystem ausgebildet ist. Das Telekommunikations-Endgerät umfasst eine Einrichtung zum Aufzeichnen von Videosequenzen einer natürlichen Person, eine Einrichtung zum Erzeugen von Steuerparametern zum Steuern eines virtuellen Körpermodells unter Ansprechen auf die Videosequenz, eine Umsetzungseinrichtung zum Umsetzen der Steuerparameter in Videodaten, die zu den Videodaten einer herkömmlichen Videokamera kompatibel sind , eine Einrichtung zum Erzeugen eines Videodatenstroms aus den Videodaten unter Anwendung eines standardisierten Videokommunikations-Protokolls sowie eine Sendeeinrichtung zum Übertragen des Videodatenstroms über das Kommunikationsnetz zu einer anderen Endeinrichtung.

Angemerkt sei an dieser Stelle, dass es sich bei dem standardisierten Videokommunikations-Protokoll um ein herkömmliches Video-Telefonie-Protokoll handeln kann. Weiterhin kann das Telekommunikations-Endgerät eine Feststellungseinrichtung aufweisen, die feststellt, ob die andere Endeinrichtung zum Verarbeiten von Steuerparametern, die zum Steuern eines virtuellen Körpermodells benötigt werden,ausgebildet ist. Ferner weist das Telekommunikations-Endgerät eine zweite Einrichtung zum Kodieren von Steuerparametern, die zum Steuern eines virtuellen Körpermodells verwendbar sind, auf, wobei die Kodierung unter Anwendung eines standardisierten Kodieralgorithmus erfolgt. Weiterhin ist eine Einrichtung zum Übertragen der kodierten Steuerparameter vorgesehen.

Die Erfindung wird nachfolgend anhand eines Ausführungsbeispiels in Verbindung mit den beiliegenden Zeichnungen näher erläutert. Es zeigen:
- Fig. 1: ein Video-Telefonie-Kommunikationssystem gemäß dem Stand der Technik,
und
- Fig. 2: ein Avatar-basiertes Videokommunikationssystem, in dem die Erfindung verwirklicht ist.

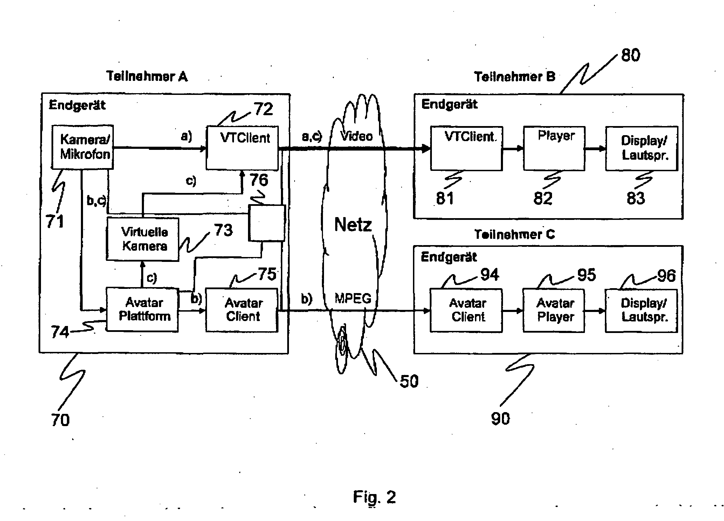

Fig. 2 zeigt ein Avatar-basiertes Videokommunikationssystem, welches erlaubt, Avatar-Informationen in einen standardmäßigen Videodatenstrom zu transformieren und diesen Videodatenstrom in eine vorhandene Video-Telefonie-Verbindung einzuspeisen.

Der einfachen Darstellung wegen sind lediglich drei Endgeräte 70, 80 und 90 dargestellt, die über wenigstens ein Kommunikationsnetz 50 miteinander verbunden werden können. Die Darstellung der Endgeräte 70, 80 und 90 wird weiterhin dadurch vereinfacht, dass lediglich eine Sendstufe des Endgeräts 70 und eine Empfangsstufe des Endgeräts 80 bzw. 90 dargestellt ist. Allerdings verfügen in der Regel alle Endgeräte über entsprechende Sende- und Empfangsstufen, um eine bidirektionale Kommunikation zu ermöglichen.

Im Einzelnen weist das Endgerät 70 eine Kamera- und Mikrofoneinrichtung 71 auf, die jedoch nicht in demselben Gerät angeordnet sein müssen. Die von der Kamera- und Mikrofoneinrichtung 71 kommenden Ausgangssignale werden einer Video-Telefonie-Komponente 72 zugeführt, in der ein herkömmlicher standardisierten Video-Telefonie-Client läuft. Die von der Kamera- und Mikrofoneinrichtung 71 kommenden Video- und Sprachsignale können ferner einem Videotracker 74 zugeführt, der im Folgenden auch als Avatar-Plattform bezeichnet wird. Bei der Avatar-Plattform 74 handelt es sich um eine an sich bekannte Einrichtung, die die von der Kamera- und Mikrofoneinrichtung 71 kommenden Videosignale erfasst, analysiert und in Steuerdaten für ein virtuelles Körpermodell umsetzt. Die Steuerdaten enthalten üblicherweise Bewegungs- und Texturparameter. Die Bewegungsdaten sind auch als "Facial Animation Parameter (FAP) und Body Animation Parameter (BAP)" bekannt. Die Steuerdaten werden dann in der Avätar-Plattform 74 oder einer nachgeschalteten Schnittstelle 75 gemäß einem standardisierten Kodieralgorithmus kodiert. Der Kodieralgorithmus kann beispielsweise auf dem MPEG-4-Standard beruhen. In der Schnittstelle 75 läuft ein an sich bekannten Avatar-Client, der in der Lage ist, beispielsweise eine IP-basierte Verbindung über das Kommunikationsnetz 50 zum Endgerät 90 aufzubauen. Die von der Avatar-Plattform 74 erzeugten Steuerparameter können im Bedarfsfall auch einer Umsetzungseinrichtung 73 zugeführt werden, die die Steuerparameter in standardisierte Videodaten umsetzen und dem Video-Telefonie-Client 72 zuführen kann. Die Videodaten sind kompatibel zu den von der Kamera- und Mikrofoneinrichtung 71 gelieferten Videodaten, so dass der Video-Telefönie-Client 72 nicht weiß, ob er Videodaten von der Kamera- und Mikrofoneinrichtung 71 oder von der Umsetzungseinrichtung 73 empfangen hat. Demzufolge wird die Umsetzungseinrichtung 73 auch als virtuelle Kamera bezeichnet.

Weiterhin weist die Sendestufe des Endgerätes 70 eine Detektor- und Steuereinrichtung 76 auf, die mit der Kamera-und Mikrofoneinrichtung 71, der Avatar-Plattform 74, dem Video-Telefonie-Client 72 und dem Avatar-Client 75 verbunden ist. Wie nachfolgend noch näher erläutert wird, ist die Detektor- und Steuereinrichtung 76 in der Lage, festzustellen, ob der Kommunikationspartner, im vorliegenden Beispiel das Endgerät 80 oder das Endgerät 90, in der Lage ist, Steuerparameter, die zum Ansteuern eines virtuellen Körpermodells verwendet werden, zu verarbeiten. Im vorliegenden Beispiel ist das Endgerät 80 als herkömmliches Video-Telefonie-Endgerät ausgebildet. Die Empfangsstufe weist deshalb, eine Komponente 81 auf, in der ein herkömmlicher standardisierter Video-Telefonie-Client 81 laufen kann. Die Video-Telefonie-Clients der Endgeräte 70 und 80 sind in der Lage, in an sich bekannter Weise, eine Video-Telefonie-Verbindung zwischen den beiden Endgeräten 70 und 80 über das Kommunikationsnetz 50 aufzubauen. Der Video-Telefonie-Client des Endgerätes 80 übergibt die Ausgangsdaten einem herkömmlichen Video-Player 82, der wiederum aus den empfangenen Signalen audiovisuelle Steuerdaten erzeugt, die in optischer und akustischer Form über eine Display- und Lautsprechereinrichtung 83 wiedergegeben werden.

Im vorliegenden Beispiel ist das Endgerät 90 als ein konventionelles Avatar-basiertes Video-Telefonie-Endgerät ausgebildet. Hierzu weist das Endgerät 90 ein Modul 94 auf, in dem ein Avatar-Client läuft. Der im Endgerät 70 und im Endgerät 90 implementierte Avatar-Client ist in der Lage, eine IP-Verbindung über das Kommunikationsnetz 50 oder ein separates Kommunikationsnetz aufzubauen, um Steuerparameter auszutauschen, die zur Steuerung und Animation eines Avatars verwendet werden. Der Avatar-Client des Endgeräts 90 übergibt empfangene Avatar-Steuerparameter einem herkömmlichen Avatar-Player 95, der die Avatar-Steuerparameter einer Display- und Lautsprechereinrichtung 96 zuführt.

Nachfolgend wird die Funktionsweise des in Fig. 2 dargestellten Avatar-basierten Videokommunikationssystems für den Fall beschrieben, dass Avatar-Informationen vom Endgerät 70 zum Endgerät 80 oder zum Endgerät 90 übertragen werden.

Angenommen sei zunächst, dass im Endgerät 70 ein Modus-Umschalter implementiert ist, der das Umschalten von einem normalen Video-Telefonie-Betrieb auf einen Avatar-Betrieb ermöglicht. Im normalen Video-Telefonie-Betrieb würden die beiden Teilnehmer A und B übe die Endgeräte 70 und 80 eine herkömmliche Video-Telefonie-Kommunikation führen, die bereits in Verbindung mit Fig. 1 erläutert worden ist.

Betrachtet wird nunmehr der Avatar-Betrieb, bei dem der Teilnehmer A des Endgerätes 70 gegenüber dem Teilnehmer B des Endgerätes 80 als Avatar auftreten möchte. In an sich bekannter Weise leitet der Video-Telefonie-Client, der im Modul 72 des Endgerätes 70 läuft, einen Verbindungsaufbau über das Kommunikationsnetz 50 zum Video-Telefonie-Client des Endgerätes 80 ein. Beispielsweise verwendet er hierzu die vom Teilnehmer A eingegebene Zielrufnummer. Das Endgerät 70 empfängt entweder von einer nicht dargestellten zentralen Steuereinrichtung, die gerätespezifische Informationen enthält, oder dem Endgerät 80 Signalisierungsdaten. Unter Ansprechen auf die Signalsierungsadten prüft die Detektor- und Steuereinrichtung 76, ob das Endgerät 80 ein Avatartaugliches Endgerät ist. Avatar-tauglich heißt, dass das Endgerät Steuerparameter, die zum Ansteuern und Animieren eines Avatars verwendet werden, verarbeiten kann. Im vorliegenden Beispiel erkennt die Detektor- und Steuereinrichtung 76, dass es sich bei dem Endgerät 80 um ein herkömmliches Video-Telefonie-Endgerät handelt. Daraufhin veranlasst die Detektor- und Steuereinrichtung 76 die Kamera- und Mikrofoneinrichtung 71, die vom Teilnehmer A aufgezeichneten audiovisuellen Daten der Avatar-Plattform 74 zu übergeben. Weiterhin veranlasst die Detektor- und Steuereinrichtung 76 die Avatar-Plattform 74, die erzeugten Steuerparameter der virtuellen Kamera 73 zuzuführen. An dieser Stelle sei angemerkt, dass es sich bei den Steuerparametern um Bewegungs- und Texturparameter als auch um Viseme-Informationen zur Steuerung von Lippenbewegungen handeln kann. Die virtuelle Kamera 76 setzt die empfangenen Steuerparameter in standardmäßige Videodaten um, wie sie auch von der Kamera- und Mikrofoneinrichtung 71 erzeugt werden. Die umgesetzten Videodaten werden von dem im Modul 72 laufenden Video-Telefonie-Client empfangen und in die aufgebaute Video-Telefonie-Verbindung in Echtzeit eingespeist. Der im Modul 81 des Endgerätes 80 laufende Video-Telefonie-Client empfängt den standardisierten Videodatenstrom und übergibt diesen dem Video-Player 82. In an sich bekannter Weise steuert der Player 82 die Display- und Lautsprechereinrichtung 83 an, um die empfangenen audiovisuellen Inhalte darzustellen. Angemerkt sei, dass, obwohl der Video-Player 82 und die Display- und Lautsprechereinrichtung 83 als separate Funktionsblöcke dargestellt sind, diese auch als Einheit ausgebildet sein können.

In Fig. 2 ist der herkömmliche Video-Telefonie-Weg durch den Buchstaben "a" gekennzeichnet, während die Übertragung einer Avatar-Information über herkömmliche Videodatenströme durch den Buchstaben "c" gekennzeichnet ist.

Gemäß einem weiteren Szenario wird eine Kommunikationsverbindung zwischen dem Endgerät 70 und dem Endgerät 90 aufgebaut. In diesem Fall wird die Detektor- und Steuereinrichtung 76 des Endgerätes 70 darüber informiert, dass es sich bei dem Endgerät 90 um ein Avatartaugliches Endgerät handelt. Demzufolge werden die von der Kamera- und Mikrofoneinrichtung 71 aufgezeichneten audiovisuellen Daten des Teilnehmers A über die Avatar-Plattform 74, den im Modul 75 laufenden Avatar-Client und über eine aufgebaute IP-Kommunikationsverbindung zum Avatar-Client des Endgerätes 90 übertragen. Dieser Kommunikationsweg ist in Fig. 2 mit dem Buchstaben "b" gekennzeichnet und entspricht dem in Fig. 2 bereits erläuterten Kommunikationsweg. Dank der Implementierung der virtuellen Kamera 73 im Endgerät 70 ist möglich, dass der Teilnehmer A gegenüber dem Teilnehmer B als Avatar auftreten kann, obwohl das,Endgerät 80 keine Avatar-Ausrüstung enthält.

## Patentansprüche

1. Verfahren zum Übertragen von Avatar-basierten Informationen in einem Videodatenstrom in Echtzeit zwischen wenigstens zwei Endeinrichtungen (70, 80, 90), die in einer Avatar-basierten Videokommunikationsumgebung angeordnet sind, mit den Schritten:
a) Aufzeichnen einer Videosequenz einer natürlichen Person in einer ersten Endeinrichtung (70);
b) Generieren von Steuerparametern zum Steuern eines virtuellen Körpermodells aus der Videosequenz;
c) Herstellen einer Kommunikationsverbindung zwischen der ersten Endeinrichtung (70) und einer zweiten Endeinrichtung (80);
d) wenn die zweite Endeinrichtung (80) nicht zum Verarbeiten von Steuerparametern zum Steuern eines virtuellen Körpermodells ausgebildet ist, dann Durchführen der Schritte e)-g), sonst Durchführen der Schritte h)-i);
e) Umsetzen der Steuerparameter in herkömmliche Videodaten;
f) Erzeugen eines Videodatenstroms aus den Videodaten unter Anwendung eines standardisierten Videokommunikations-Protokolls;
g) Übertragen des Videodatenstroms über ein Kommunikationsnetz zur zweiten Endeinrichtung (80);
h) Kodieren der Steuerparameter gemäß einem standardisierten Kodieralgorithmus;
i) Übertragen der kodierten Steuerparameter zur zweiten Endeinrichtung (90).

2. Verfahren nach Anspruch 1,
**gekennzeichnet durch** die weiteren Schritte: Feststellen, ob die zweite Endeinrichtung (90) zum Verarbeiten von Steuerparametern zum Steuern eines virtuellen Körpermodells ausgebildet ist;
wenn ja, Dekodieren der kodierten Steuerparameter und Steuern eines in der zweiten Endeinrichtung (90) gespeicherten virtuellen Körpermodells unter Verwendung der Steuerparameter und Darstellen des virtuellen Körpermodels;
wenn nein, Wiedergabe des Inhalts des Videodatenstroms über eine audiovisuelle Ausgabeeinrichtung (83).

3. Verfahren nach Anspruch 1 oder 2,
**dadurch gekennzeichnet, dass**
die Steuerparameter Bewegungs- und/oder Texturparameter enthalten.

4. Verfahren nach Anspruch 2,
**dadurch gekennzeichnet, dass**
die Steuerparameter gemäß einem MPEG-Standard kodiert werden.

5. Verfahren nach einem der vorstehenden Ansprüche
**dadurch gekennzeichnet, dass**
zwischen der ersten und zweiten Endeinrichtung eine Video-Telefonverbindung aufgebaut wird.

6. Avatar-basiertes Videokommunikationssystem zum Übertragen von Avatar-basierten Informationen in einem Videodatenstrom in Echtzeit zwischen wenigstens zwei Endeinrichtungen (70, 80, 90), umfassend
wenigstens ein Kommunikationsnetz (50),
mehrere mit dem Kommunikationsnetz (50) verbindbare Endeinrichtungen (70, 80, 90), wobei wenigstens eine erste Endeinrichtung (70) eine Sendestufe mit folgenden Merkmalen aufweist:
eine Einrichtung (71) zum Aufzeichnen von Videosequenzen einer natürlichen Person;
eine Einrichtung (74) zum Erzeugen von Steuerparametern zum Steuern eines virtuellen Körpermodells unter Ansprechen auf die Videosequenz;
eine Umsetzungseinrichtung (73) zum Umsetzen der Steuerparameter in standardmäßige Videodaten;
eine erste Einrichtung (72) zum Kodieren der Videodaten in einen Videodatenstrom unter Anwendung eines standardisierten Videokommunikations-Protokolls;
eine Sendeeinrichtung (72) zum Übertragen des Videodatenstroms über das Kommunikationsnetz (50) zu einer zweiten Endeinrichtung (80), wobei die zweite Endeinrichtung (80) eine Empfangseinrichtung (81, 82) zum Empfangen des Videodatenstroms aufweist, und
eine Einrichtung (76) zum Feststellen, ob die zweite Endeinrichtung (90) zum Verarbeiten von Steuerparametern zum Steuern eines virtuellen Körpermodells ausgebildet ist, wobei die Sendestufe der ersten Endeinrichtung eine zweite Einrichtung (75) zum Kodieren von Steuerparametern, die zum Steuern eines virtuellen Körpermodells verwendbar sind, unter Anwendung eines standardisierten Kodieralgorithmus und zum Übertragen kodierter Steuerparameter aufweist.

7. Avatar-basiertes Videokommunikationssystem nach Anspruch 6,
**gekennzeichnet dadurch, dass**
die zweite Endeinrichtung (80) eine Einrichtung (83) zur Wiedergabe des Inhalts des Videodatenstroms aufweist.

8. Avatar-basiertes Videokommunikationssystem nach Anspruch 7,
**dadurch gekennzeichnet, dass**
der Kodieralgorithmus auf einem MPEG-Standard beruht.

9. Avatar-basiertes Videokommunikationssystem nach Anspruch 6, 7 oder 8,
**dadurch gekennzeichnet, dass**
die Sendestufe eine Einrichtung (71) zur Aufnahme von Sprachsignalen der natürlichen Person und eine Einrichtung zum Übertragen der Sprachsignale über das Kommunikationsnetz (50) aufweist, und dass
die zweite Endeinrichtung eine Empfangseinrichtung zum Empfangen von Sprachsignalen und eine akustische Einrichtung (83, 96) zur Sprachausgabe aufweist.

10. Avatar-basiertes Videokommunikationssystem nach einem der Ansprüche 7 bis 9,
**dadurch gekennzeichnet, dass**
die erste und zweite Endeinrichtung (70, 80) zur Video-Telefonie ausgebildet sind.

11. Telekommunikations-Endgerät (70) für den Einsatz in einem Avatar-basiertes Videokommunikationssystem nach einem der Ansprüche 6 bis 10, umfassend
eine Einrichtung (71) zum Aufzeichnen von Videosequenzen einer natürlichen Person;
eine Einrichtung (74) zum Erzeugen von Steuerparametern zum Steuern eines virtuellen Körpermodells unter Ansprechen auf die Videosequenz;
eine Umsetzungseinrichtung (73) zum Umsetzen der Steuerparameter in standardmäßige Videodaten;
eine Einrichtung (72) zum Erzeugen eines Videodatenstroms aus den Videodaten unter Anwendung eines standardisierten Videokommunikations-Protokolls;
eine Sendeeinrichtung (72) zum Übertragen des Videodatenstroms über das Kommunikationsnetz zu einer anderen Endeinrichtung (80), und eine Einrichtung (76) zum Feststellen, ob eine Zieleinrichtung zum Verarbeiten von Steuerparametern zum Steuern eines virtuellen Körpermodells ausgebildet ist, eine zweite Einrichtung (75) zum Kodieren von Steuerparametern, die zum Steuern eines virtuellen Körpermodells verwendbar sind, gemäß einem standardisierten Kodieralgorithmus und eine Einrichtung (75) zum Übertragen der kodierten Steuerparameter.

## Claims

1. A method of transmitting avatar-based information in a video data stream in real time between at least two terminals (70, 80, 90) which are arranged in an avatar-based video communication environment, comprising the steps of:
a) recording a video sequence of a natural person in a first terminal (70);
b) generating, from the video sequence, control parameters for controlling a virtual body model;
c) establishing a communication connection between the first terminal (70) and a second terminal (80);
d) if the second terminal (80) is not adapted to process control parameters for controlling a virtual body model, then performing steps e) to g), otherwise performing steps h) to i);
e) converting the control parameters into conventional video data;
f) generating a video data stream from the video data using a standard video communication protocol;
g) transmitting the video data stream via a communication network to the second terminal (80);
h) encoding the control parameters according to a standard encoding algorithm;
i) transmitting the encoded control parameters to the second terminal (90).

2. The method according to claim 1, **characterized by** the further steps of:
determining whether the second terminal (90) is adapted for processing control parameters for controlling a virtual body model;
if so, decoding the encoded control parameters and controlling a virtual body model stored in the second terminal (90) using the control parameters, and displaying the virtual body model;
if not, displaying the content of the video data stream via an audiovisual output device (83).

3. The method according to claim 1 or 2, **characterized in that** the control parameters include motion and/or texture parameters.

4. The method according to claim 2, **characterized in that** the control parameters are encoded according to an MPEG standard.

5. The method according to any of the preceding claims, **characterized in that** a video telephone connection is established between the first and the second terminal.

6. An avatar-based video communication system for transmitting avatar-based information in a video data stream in real time between at least two terminals (70, 80, 90), comprising:
at least one communication network (50);
a plurality of terminals (70, 80, 90) connectable to the communication network (50), wherein at least a first terminal (70) comprises a transmitter stage including die following features:
means (71) for recording video sequences of a natural person;
means (74) for generating control parameters for controlling a virtual body model in response to the video sequence;
conversion means (73) for converting the control parameters into standard video data;
first encoding means (72) for encoding the video data into a video data stream using a standard video communication protocol;
transmitter means (72) for transmitting the video data stream via the communication network (50) to a second terminal (80), wherein the second terminal (80) includes receiver means (81, 82) for receiving the video data stream; and
means (76) for determining whether the second terminal (90) is adapted for processing control parameters for controlling a virtual body model, wherein the transmitter stage of the first terminal includes second encoding means (75) for encoding control parameters suitable for controlling a virtual body model using a standard encoding algorithm, and for transmitting encoded control parameters.

7. The avatar-based video communication system according to claim 6, **characterized in that** the second terminal (80) comprises means (83) for reproducing the content of the video data stream.

8. The avatar-based video communication system according to claim 7, **characterized in that** the encoding algorithm is based on an MPEG standard.

9. The avatar-based video communication system according to claim 6, 7 or 8, **characterized in that**
the transmitter stage comprises means (71) for recording voice signals of the natural person and means for transmitting the voice signals via the communication network (50); and that
the second terminal has receiver means for receiving voice signals and acoustic means (83, 96) for voice output.

10. The avatar-based video communication system according to any of claims 7 to 9, **characterized in that** the first and the second terminal (70, 80) are adapted for video telephony.

11. A telecommunications terminal (70) for use in an avatar-based video communication system according to any of claims 6 to 10, comprising
means (71) for recording video sequences of a natural person;
means (74) for generating control parameters for controlling a virtual body model in response to the video sequence;
conversion means (73) for converting the control parameters into standard video data;
means (72) for generating a video data stream from the video data using a standard video communication protocol;
transmitter means (72) for transmitting the video data stream via the communication network to another terminal (80); and
means (76) for determining whether a destination terminal is adapted for processing control parameters for controlling a virtual body model;
second encoding means (75) for encoding control parameters suitable for controlling a virtual body model in accordance with a standard coding algorithm; and
means (75) for transmitting the encoded control parameters.

## Revendications

1. Procédé de transmission d'informations basées sur des avatars dans un flux de données vidéo en temps réel entre au moins deux dispositifs terminaux (70, 80, 90) présents dans un environnement de communication vidéo basé sur des avatars, comprenant les étapes suivantes :
a) enregistrement d'une séquence vidéo d'une personne physique dans un premier dispositif terminal (70) ;
b) génération de paramètres de commande pour la commande d'un modèle corporel virtuel à partir de la séquence vidéo ;
c) établissement d'une liaison de communication entre le premier dispositif terminal (70) et un deuxième dispositif terminal (80) ;
d) si le deuxième dispositif terminal (80) n'est pas prévu pour le traitement de paramètres de commande pour la commande d'un modèle corporel virtuel, exécution des étapes e) à g), sinon exécution des étapes h) et i) ;
e) conversion des paramètres de commande en données vidéo conventionnelles ;
f) génération d'un flux de données vidéo à partir des données vidéo en recourant à un protocole de communication vidéo normalisé ;
g) transmission du flux de données vidéo au deuxième dispositif terminal (80) par l'intermédiaire d'un réseau de communication ;
h) codage des paramètres de commande conformément à un algorithme de codage normalisé ;
i) transmission des paramètres de commande codés au deuxième dispositif de commande (90).

2. Procédé selon la revendication 1, **caractérisé par** les autres étapes suivantes :
détermination si le deuxième dispositif terminal (90) est prévu pour le traitement de paramètres de commande pour la commande d'un modèle corporel virtuel ;
si oui, décodage des paramètres de commande codés et commande d'un modèle corporel virtuel mémorisé dans le deuxième dispositif terminal (90) en recourant aux paramètres de commande, et représentation du modèle corporel virtuel ;
si non, lecture du contenu du flux de données vidéo au moyen d'un dispositif de sortie audiovisuel (83).

3. Procédé selon la revendication 1 ou 2, **caractérisé en ce que** :
les paramètres de commande comprennent des paramètres de mouvement et/ou de texture.

4. Procédé selon la revendication 2, **caractérisé en ce que** :
les paramètres de commande sont codés conformément à une norme MPEG.

5. Procédé selon l'une des revendications précédentes, **caractérisé en ce que** :
une liaison vidéotéléphonique est établie entre le premier et le deuxième dispositif terminal.

6. Système de communication vidéo basé sur des avatars pour la transmission d'informations basées sur des avatars dans un flux de données vidéo en temps réel entre au moins deux dispositifs terminaux (70, 80, 90), comprenant :
au moins un réseau de communication (50),
plusieurs dispositifs terminaux (70, 80, 90) pouvant être reliés au réseau de communication (50), au moins un premier dispositif terminal (70) comportant un étage d'émission ayant les caractéristiques suivantes :
un dispositif (71) d'enregistrement de séquences vidéo d'une personne physique ;
un dispositif (74) de génération de paramètres de commande pour la commande d'un modèle corporel virtuel en réaction à la séquence vidéo ;
un dispositif de conversion (73) pour la conversion des paramètres de commande en données vidéo standard ;
un premier dispositif (72) pour le codage des données vidéo en un flux de données vidéo en recourant à un protocole de communication vidéo normalisé ;
un dispositif émetteur (72) pour la transmission du flux de données vidéo à un deuxième dispositif terminal (80) par l'intermédiaire du réseau de communication (50), le deuxième dispositif terminal (80) comportant un dispositif récepteur (81, 82) pour la réception du flux de données vidéo, et
un dispositif (76) permettant de déterminer si le deuxième dispositif terminal (90) est prévu pour le traitement de paramètres de commande pour la commande d'un modèle corporel virtuel, l'étage d'émission du premier dispositif terminal comportant un deuxième dispositif (75) pour le codage de paramètres de commande exploitables pour la commande d'un modèle corporel virtuel en recourant à un algorithme de codage normalisé et pour la transmission de paramètres de commande codés.

7. Système de communication vidéo basé sur des avatars selon la revendication 6, **caractérisé en ce que** :
le deuxième dispositif terminal (80) comporte un dispositif (83) pour la lecture du contenu du flux de données vidéo.

8. Système de communication vidéo basé sur des avatars selon la revendication 7, **caractérisé en ce que** :
l'algorithme de codage est fondé sur une norme MPEG.

9. Système de communication vidéo basé sur des avatars selon la revendication 6, 7 ou 8, **caractérisé en ce que** :
l'étage d'émission comporte un dispositif (71) pour l'enregistrement de signaux vocaux de la personne physique et un dispositif pour la transmission des signaux vocaux par l'intermédiaire du réseau de communication (50),
et **en ce que** :
le deuxième dispositif terminal comporte un dispositif récepteur pour la réception de signaux vocaux et un dispositif acoustique (83, 96) pour la sortie vocale.

10. Système de communication vidéo basé sur des avatars selon l'une des revendications 7 à 9, **caractérisé en ce que** :
les premier et deuxième dispositifs terminaux (70, 80) sont prévus pour la vidéotéléphonie.

11. Terminal de télécommunication (70) à mettre en oeuvre dans un système de communication vidéo basé sur des avatars selon l'une des revendications 6 à 10, comprenant :
un dispositif (71) pour l'enregistrement de séquences vidéo d'une personne physique ;
un dispositif (74) pour la génération de paramètres de commande pour la commande d'un modèle corporel virtuel en réaction à la séquence vidéo ;
un dispositif de conversion (73) pour la conversion des paramètres de commande en données vidéo standard ;
un dispositif (72) pour la génération d'un flux de données vidéo à partir des données vidéo en recourant à un protocole de communication vidéo normalisé ;
un dispositif émetteur (72) pour la transmission du flux de données vidéo vers un autre dispositif terminal (80) par l'intermédiaire du réseau de communication, et
un dispositif (76) pour déterminer si un dispositif cible est prévu pour le traitement de paramètres de commande pour la commande d'un modèle corporel virtuel,
un deuxième dispositif (75) pour le codage de paramètres de commande exploitables pour la commande d'un modèle corporel virtuel conformément à un algorithme de codage normalisé et un dispositif (75) pour la transmission des paramètres de commande codés.
